# EUROPEAN PATENT APPLICATION

(11) **EP 3 689 510 A1**
(43) Date of publication of application: **05.08.2020**
(21) Application number: 20153171.2
(22) Date of filing: 22.01.2020
(51) Int. Cl.: B22F 7/06, B22F 7/08, C23C 24/04, B22F 5/00, B22F 5/06, B33Y 10/00, B33Y 80/00, B64D 33/02, B64D 13/00, B32B 1/08, B32B 27/00, B22F 3/24, B22F 3/105

(54) **COLD SPRAY REINFORCED POLYMER SYSTEM**

(30) Priority: 01.02.2019 US 201916265159
(71) Applicant: United Technologies Corporation, Farmington, CT 06032 (US)
(72) Inventor: BINEK, Lawrence, Glastonbury, CT Connecticut 06033 (US); SIOPIS, Matthew J., West Hartford, CT Connecticut 06107 (US)
(74) Representative: Dehns

(57) **Abstract**

An additive manufacturing method for an aircraft part (10) having a polymer body (12) and a metallic structural feature (20) includes generating data defining the aircraft part (10) with the metallic structural feature (20). A build process is determined for the polymer body (12) of the aircraft part (10). The polymer body (12) of the aircraft part (10) is manufactured. A build path for a near net shape metallic structure (14) is determined. The near net shape metallic structure (14) is manufactured using an additive manufacturing process to direct metallic powder from a cold-spray nozzle on at least a section of the polymer body (12). The near net shape metallic structure (14) is machined to provide the aircraft part (10) having the polymer body (12) and the metallic structural feature (20).

## Description

### BACKGROUND

Fuel consumption is a major cost center for the aerospace industry. There is a direct correlation between the weight of an aircraft and fuel consumption. Gas turbine engines designed for aircraft include thousands of metal parts. As such, engine and aircraft manufacturers are constantly seeking new technologies to reduce the part count and the weight of their engines and aircraft, respectively. One such strategy involves substituting traditional metal parts with parts made of lighter weight materials, such as a polymer or composite part. However, many polymers lack the strength or are not wear resistant to be useful for some applications in the aerospace industry.

### SUMMARY

An additive manufacturing method for an aircraft part having a polymer body and a metallic structural feature according to a first aspect of the present disclosure includes generating data defining the aircraft part with the metallic structural feature. A build process is determined for the polymer body of the aircraft part. The polymer body of the aircraft part is manufactured. A build path for a near net shape metallic structure is determined. The near net shape metallic structure is manufactured using an additive manufacturing process to direct metallic powder particles from a cold-spray nozzle onto at least a section of the polymer body. The near net shape metallic structure is machined to provide the aircraft part having the polymer body and the metallic structural feature.

In an embodiment of the above, the aircraft part is for an air handling duct.

An additively manufactured aircraft part according to a second aspect of the present disclosure includes a polymer body, a near net shape metallic structure manufactured by using an additive manufacturing process to direct a cold-spray nozzle onto at least a section of the polymer body, and a metallic structural feature, wherein the metallic structural feature is created by a machining process.

In an embodiment of the above, the aircraft part is for an air handling duct.

### BRIEF DESCRIPTION OF THE DRAWINGS

FIG. 1 is a perspective view of an additively manufactured part.
FIG. 2 is a flow chart for additively manufacturing a metallic structural feature onto a polymer.

### DETAILED DESCRIPTION

The present disclosure relates generally to reinforcing polymer components used in an aircraft. More specifically this disclosure relates to using additive manufacturing techniques to apply, layer-by-layer, a metallic powder onto a polymer component using cold spray.

Cold gas-dynamic spray (hereinafter "cold spray") is a technique that is sometimes employed to form coatings of various materials on a substrate. In general, a cold spray system uses a pressurized carrier gas to accelerate particles through a supersonic nozzle and toward a targeted surface. The cold spray process is referred to as a cold process because the particles are mixed and sprayed at a temperature that is well below their melting point, and the particles are near ambient temperature when they impinge the targeted surface. Converted kinetic energy, rather than high particle temperature, causes the particles to plastically deform, which in turn causes the particles to form a bond with the targeted surface. Bonding to the component surface occurs as a solid state process with insufficient thermal energy to transition the solid powders to molten droplets. Cold spray techniques can therefore produce a coating that strengthens the component using a variety of materials that may not be easily applied using techniques that expose the materials to high temperatures.

Use of a high temperature liquid or particle may react with or disrupt a substrate surface and perhaps lower its strength. For example, plastic and other polymeric materials typically have relatively low melting temperatures when compared to metal substrates, and would consequently melt and/or burn upon impact with molten metals. Cold spray enables the sprayed materials to bond with such substrates at a relatively low temperature. Plastic deformation facilitates bonding of sprayed particles to the substrate.

Metal parts are desirable in the aerospace industry for their mechanical strength and wear resistance even though the metal parts tend to be heavy due to the high densities of most metals. The stresses imposed upon a metal part in service may be analyzed and, frequently, there are areas of the part, which receive little or no stress. An ideal part may contain, on the one hand, a sufficient amount of metal in a highly stressed area to withstand the necessary loads and perform the function of the part. On the other hand, the ideal part would contain less or no material in areas with little or no stress, thereby reducing the weight of the metal part to an idealized minimum. For example, a part may experience stress only at the point of attachment. Thus, reinforcing a polymer part with a metallic structure at the point of attachment can extend the service life of the part. Using high density metals only where their mechanical strength and wear resistance are needed, helps to minimize the weight of each component.

Using additive manufacturing techniques to direct a cold spray nozzle to build up a metallic structure layer-by-layer allows a near net shape metallic structure to be built on and integrated with a polymer component. This results in a polymer component with a reinforced near net shape metallic structure, which may be further processed such that a final metallic structural feature meets the high tolerance requirements of an aircraft engine.

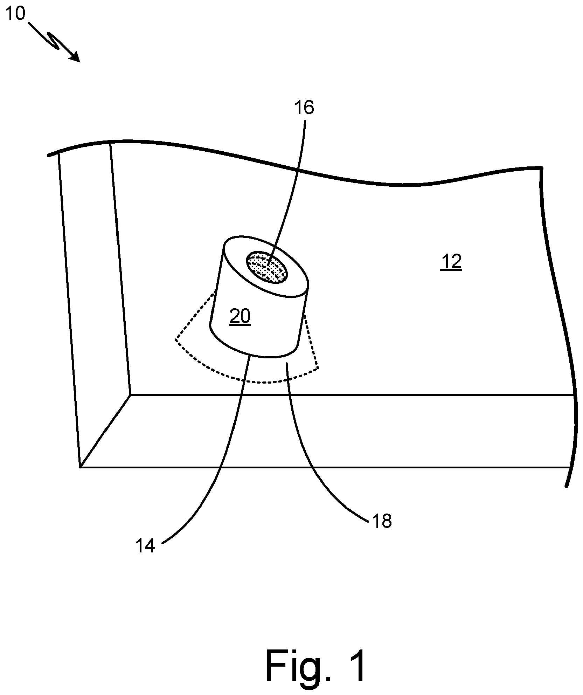

FIG. 1 is a perspective view of an additively manufactured part. FIG. 1 shows additively manufactured part 10, polymer body 12, near net shape metallic structure 14, attachment feature 16, finishing feature 18, and metallic structural feature 20. Additively manufactured part 10 includes a polymer body 12 and near net shape metallic structure 14. Near net shape metallic structure 14 may be further processed to include attachment feature 16, which can be used to facilitate adjoining additively manufactured part 10 with another component or part within an aircraft. As seen in FIG. 1, attachment feature 16 is a bolt hole. Attachment feature 16 can also be, but not limited to, a threaded fastener or a pin.

Near net shape metallic structure 14 may also be further processed to include finishing feature 18 which can be achieved by removal of excess cold sprayed metal to further reduce the overall weight of the part or to obtain a specific geometry. Many aircraft parts require a unique geometry and tight tolerances in order to achieve maximum efficiencies and meet required safety standards. As such, metallic structural feature 20 of additively manufactured part 10 can include both attachment feature 16 and finishing feature 18. Alternatively, metallic structural feature 20 includes neither attachment feature 16 nor finishing feature 18 and is substantially the same as near net shape metallic structure 14. This may occur, for example, when metallic structural feature 20 is added to polymer body 12 of additively manufactured part 10 where excessive wear forces are present. In such a case, metallic structural feature 20 can act as a bearing surface to extend the life of additively manufactured part 10.

Near net shape metallic structure 14 and metallic structural feature 20 can be formed of any metal or alloy, such as, for example, aluminum or stainless steel. Although metallic structural feature 20 is depicted in FIG. 1 as extending only above polymer body 12 of additively manufactured part 10, metallic structural feature 20 can also extend partially into polymer body 12 or extend all the way through polymer body 12. Metallic structural feature 20 which extends all the way through polymer body 12 can also be substantially flush with a top surface and a bottom surface of polymer body 12.

Additively manufactured part 10 is a part for use within an aircraft. Additively manufactured part 10 can be used anywhere a lighter weight material, such as a polymer body, may be substituted for a relatively heavier material, such as metal. The polymer body is substituted for sections of the part where the polymer body is able to tolerate the environment of a working aircraft. These sections of the part may be areas that experience little or no stress during the service life of the part. Typically, a suitable aircraft environment, where the polymer body may be substituted for a metal part, is on a "cold side." That is, the aircraft environment is cool enough that the polymer body will not reach a temperature, above which, the polymer will begin to melt or otherwise deform. The aircraft part can be, for example, for an air handling duct, nacelle, or interior panel.

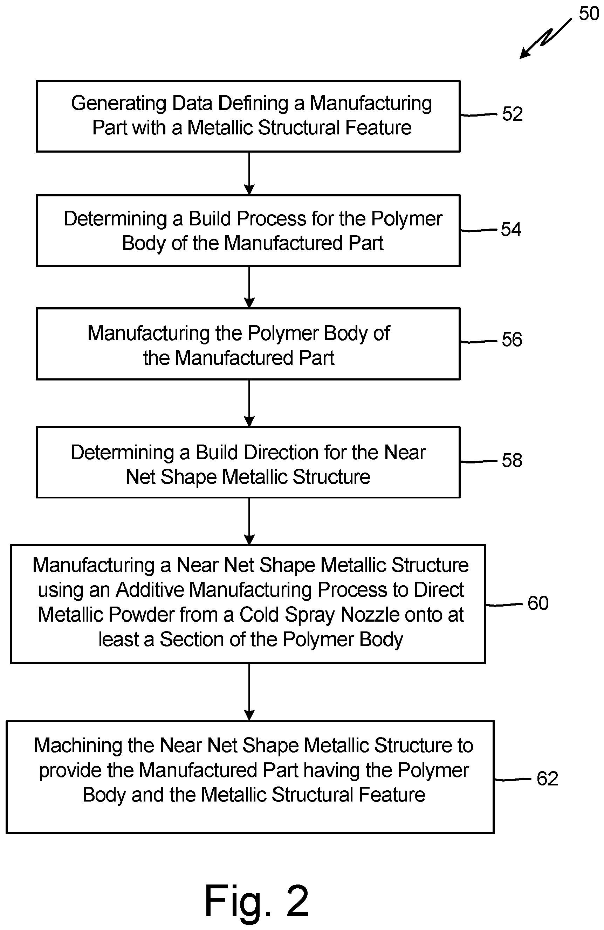

FIG. 2 is a flow chart for additively manufacturing a metallic structural feature onto a polymer. FIG. 2 shows additive manufacturing process 50, which includes generating data defining a part with a metallic structural feature (step 52), determining a build process for the polymer body of the additively manufactured part (step 54), manufacturing the polymer body of the additively manufactured part (step 56), determining a build direction for the near net shape metallic structure (step 58), manufacturing a near net shape metallic structure using an additive manufacturing process to direct a cold spray nozzle onto at least a section of the polymer body (step 60), and machining the near net shape metallic structure to provide the additively manufactured part having the polymer body and the metallic structural feature (step 62).

Additive manufacturing process 50 begins with step 52, which includes generating data defining an additively manufactured part with a metallic structural feature. A user may first begin by identifying a polymer or other relatively light weight material to use as the polymer body in additively manufactured part. The polymer can be any polymer capable of having a metallic structure adhered to and integrated with the polymer when metallic powder is directed from a cold spay nozzle onto the polymer body. The polymer body can be, for example, any thermoplastic polymer and is preferably a thermoplastic polymer that meets the flame, smoke, and toxicity requirements set forth for the aerospace industry (FST polymer). Step 52 may also include a user or computer assisted program identifying where the part may experience stress during service and, as such, be able to strengthen the part or reduce wear in those regions by adding a metallic structural feature.

Data defining an additively manufactured part with a metallic structural feature 52 is typically generated using a computer program, such as a three dimensional computed aided drafting and design program (3D CAD). The initial data generated gives a three dimensional representation of the additively manufactured part. The geometry of the three dimensional model is then defined, typically by converting 3D CAD file to a stereolithography (STL) file format. Defining the geometry of the additively manufactured part provides data for the surfaces of the additively manufactured part. Generating the data defining the additively manufactured part generates a computer model that may be communicated to an additive manufacturing machine for additively manufacturing a part. While certain steps for generating the data defining the additively manufactured part have been described, it is understood that the exact steps taken to generate the data defining an additively manufactured part can vary.

Step 54 includes determining a build process for the polymer body of the additively manufactured part. Although the polymer body can be manufactured using additive manufacturing, the polymer body can also be manufactured using any other process known in the art, such as injection molding or casting.

Step 56 includes manufacturing the polymer body of the additively manufactured part using the determined build process for the polymer body of the additively manufactured part identified in step 54.

Step 58 includes determining a build direction for the near net shape metallic structure. The build direction of the near net shape metallic structure is the direction in which layers are added throughout the additive manufacturing process to, at first, at least a section of the polymer body and, then second, to the growing near net shape metallic structure. Thus, the build direction is the direction that the near net shape metallic structure grows as additional layers are added through an additive manufacturing process using a cold spray nozzle. The build direction may be determined in any way known in the art.

Step 60 includes manufacturing a near net shape metallic structure using an additive manufacturing process to direct metallic powder from a cold spray nozzle onto at least a section of the polymer body of an additively manufactured part. The polymer body can be held in a fixed position and the cold spray nozzle moved by a robotic arm over at least a section of the polymer body to build the near net shape metallic structure. Alternatively, the cold spray nozzle can remain fixed and the polymer body be moved or the cold spray nozzle and the polymer body can be moved together. The near net shape metallic structure is additively manufactured by rastering the cold spray nozzle over at least a section of the polymer body using the build direction determined in step 58. The raster pattern is repeated until the determined build direction in step 58 is complete, which results in the near net shape metallic structure having an adequate size and thickness to perform the desired function or the near net shape metallic structure is ready for further processing.

Step 62 includes machining the near net shape metallic structure to provide the additively manufactured part having the polymer body and the metallic structural feature. Machining can include, for example, grinding, drilling, turning, and milling. The machining can add structural features to the near net shape metallic structure, such as drilling a hole to provide a bolt hole and/or add threads to the near net shape metallic structure for use as a threaded fastener. Machining can include removing excess material either simply to reduce the overall weight of the part or to achieve a specific geometric blueprint.

Substituting lighter weight components for traditionally metal parts reduces the overall weight of an aircraft, which leads to fuel savings. Reinforcing those lighter weight components at points of attachment or other areas of stress or wear can extend the useful life of the part considerably. Using an additive manufacturing technique to direct metallic powder from a cold spray nozzle allows a metallic structure having a near net shape to be built on and integrated with a polymer, which may not be able to tolerate the high temperatures employed by other techniques, such as arc welding. Integration of the metallic structure with the polymer also reduces the overall part count, which simplifies assembly.

### Discussion of Possible Embodiments

The following are non-exclusive descriptions of possible embodiments of the present invention.

A manufacturing method for an aircraft part having a polymer body and a metallic structural feature includes generating data defining the aircraft part including the metallic structural feature; determining a build process for the polymer body of the aircraft part; manufacturing the polymer body of the aircraft part; determining a build path for a near net shape metallic structure; manufacturing the near net shape metallic structure, using an additive manufacturing process to direct metallic powder from a cold-spray nozzle onto at least a section of the polymer body; and machining the near net shape metallic structure to provide the aircraft part having the polymer body and the metallic structural feature.

The method of the preceding paragraph can optionally include, additionally and/or alternatively, any one or more of the following:
The metallic structural feature is formed of aluminum.

The polymer is a thermoplastic polymer.

The metallic structural feature facilitates attachment of the aircraft part to a component.

The metallic structural feature is a bolt hole.

The metallic structural feature is a bearing surface.

Manufacturing the polymer body is achieved by an additive manufacturing process.

The aircraft part is for an air handling duct.

A manufactured aircraft part includes a polymer body and a near net shape metallic structure manufactured by using an additive manufacturing process to direct metallic powder from a cold-spray nozzle onto at least a section of the polymer body.

The apparatus of the preceding paragraph can optionally include, additionally and/or alternatively, any one or more of the following:
The aircraft part includes a metallic structural feature, which is created by a machining process.

The metallic structural feature is formed of aluminum.

The polymer is a thermoplastic polymer.

The metallic structural feature facilitates attachment of the aircraft part to a component.

The metallic structural feature is a bolt hole.

The metallic structural feature is a bearing surface.

Manufacturing the polymer body is achieved by an additive manufacturing process.

The aircraft part is for an air handling duct.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A manufacturing method for an aircraft part (10) having a polymer body (12) and a metallic structural feature (20), the method comprising:
generating data defining the aircraft part (10) including the metallic structural feature (20);
determining a build process for the polymer body (12) of the aircraft part (10);
manufacturing the polymer body (12) of the aircraft part (10);
determining a build path for a near net shape metallic structure (14);
manufacturing the near net shape metallic structure (14), using an additive manufacturing process to direct metallic powder from a cold-spray nozzle onto at least a section of the polymer body (12); and
machining the near net shape metallic structure (14) to provide the aircraft part (10) having the polymer body (12) and the metallic structural feature (20).

2. The method of claim 1, wherein the metallic structural feature (20) is formed of aluminum.

3. The method of claim 1 or 2, wherein the polymer is a thermoplastic polymer.

4. The method of any preceding claim, wherein the metallic structural feature (20) facilitates attachment of the aircraft part (10) to a component.

5. The method of claim 4, wherein the metallic structural feature (20) is a bolt hole (16).

6. The method of claim 1, 2 or 3, wherein the metallic structural feature (20) is a bearing surface.

7. A manufactured aircraft part (10) comprising:
a polymer body (12); and
a near net shape metallic structure (14) manufactured by using an additive manufacturing process to direct metallic powder from a cold-spray nozzle onto at least a section of the polymer body (12).

8. The aircraft part of claim 7, further comprising a metallic structural feature (20), wherein the metallic structural feature (20) is created by a machining process.

9. The aircraft part of claim 7 or 8, wherein the metallic structural feature (20) is formed of aluminum.

10. The aircraft part of any of claims 7 to 9, wherein the polymer is a thermoplastic polymer.

11. The aircraft part of any of claims 7 to 10, wherein the metallic structural feature (20) facilitates attachment of the aircraft part (10) to a component.

12. The aircraft part of claim 11, wherein the metallic structural feature (20) is a bolt hole (16).

13. The aircraft part of any of claims 7 to 10, wherein the metallic structural feature (20) is a bearing surface.

14. The method or aircraft part of any preceding claim, wherein manufacturing the polymer body (12) is achieved by an additive manufacturing process.

15. The method or aircraft part of any preceding claim, wherein the aircraft part (10) is for an air handling duct.
